Europäisches Patentamt

European Patent Office

Office européen des brevets

(11) Publication number: **0 220 799**
**A2**

# (12) EUROPEAN PATENT APPLICATION

(21) Application number: 86305957.2

(22) Date of filing: 01.08.86

(51) Int. Cl.⁴: **B29C 51/44** , B31B 43/00

(30) Priority: 28.10.85 US 792090

(43) Date of publication of application:
06.05.87 Bulletin 87/19

(84) Designated Contracting States:
AT BE CH DE FR GB IT LI LU NL SE

(71) Applicant: SHELL OIL COMPANY
900, Louisiana
Houston Texas 77001(US)

(72) Inventor: Bradford, John Francis, Jr.
19331 Cypress Bay
Katy Texas 77449(US)

(74) Representative: Myerscough, Philip Boyd et al
J.A.Kemp & Co. 14, South Square Gray's Inn
London, WC1R 5EU(GB)

(54) **Method of making a rolled lip container.**

(57) A process for making a rigid packaging container comprising a rolled lip or flange (l0) which comprises deforming a sheet (7) of metal, plastics or paper composite material into a desired shape which contains said lip or flange (l0), advancing a trimming means (l3) from the convex or underside (9) of the shape while said shape is supported so that it does not deform, and cutting the shape from the convex or underside (9) of the shape at a point (14), or undercut, where the lip or flange (l0) joins a skirt (ll).

EP 0 220 799 A2

# METHOD OF MAKING A ROLLED LIP CONTAINER

This invention relates to a method of making rigid packaging containers, more particularly rigid packaging containers which have a "rolled lip".

There are many ways to form rigid packaging containers. They may be formed by conversion of, for example, a plastics, metal or paper composite sheet via solid phase pressure-forming and solid phase stretch-forming melt thermal processes. It is sometimes necessary or desirable to manufacture containers which have a "rolled lip" or flange which .extends outwardly and downwardly from the top of the side wall of the container. An example of such a rolled lip is found on a "stadium" cup which is used to drink various beverages. The "rolled lip" container may also be useful for packaging various dairy products, frozen foods, meat, fish or poultry. An outer lip or flange which is rolled under is advantageous for various reasons. One reason is that the rolled lip protects the drinker of a beverage from being cut by the sharp edge of a lip which has not been rolled under. In addition, a rolled lip facilitates packaging and wrapping of various containers for holding foods and beverages. For example, it may be desirable to wrap a container with a see-through plastics film for packaging and storage on the shelf of supermarkets. Conventional lips which are not rolled under often have sharp and jagged edges which may puncture the film which is used to wrap over the top of the filled container and which is usually wrapped underneath the lip edge.

In producing a "rolled lip" container, the rolled lip has been produced in a separate, secondary, lip-rolling step. Heretofore, a "rolled lip" container has been made in two stages, in the first stage with a lip generally perpendicular to the side wall of the container and then in the second stage with this lip rolled under to create the appropriate rolled angle to facilitate downstream use. This second stage of forming the lip into a rolled configuration has been time consuming and unwieldy, not to mention expensive.

In past attempts to produce a molded article which has a "rolled lip" without the necessity of a separate rolling step, the article had to be shaped with the rolled lip and at the same time the excess material had to be trimmed from the article. The trimming of the article at about the lip portion resulted in a flattening of the lip. This is because the trimming process has occurred with the top or concave part of the shape remaining in an upright position so that when the cutter edge pressed down upon the edge of the "rolled lip", the lip, as it was cut, flattened substantially to make a separate lip rolling step necessary.

The invention provides a method by which a rolled lip container can be fabricated without a secondary lip rolling step. According to the invention there is provided a method of making a rigid packaging container having a rolled lip or flange which comprises deforming a sheet of metal, plastics or paper composite material into a shape which comprises a generally concave container portion defined by a base portion and an upwardly extending side wall, a rolled lip or flange portion extending outwardly and downwardly around the periphery of said side wall, and a skirt portion depending from said rolled lip or flange and extending generally outwardly therefrom, advancing a trimming means from the convex or underside of said shape while said shape is supported so that it does not deform; and cutting said shape from said convex or underside at a point at or adjacent the junction between said rolled lip or flange and said skirt to provide a container comprising said container portion and said rolled lip or flange.

The invention will be described in more detail by reference to the accompanying drawings in which:-

Figure 1 is a vertical cross-section through a mold for making a "rolled lip" rigid packaging container;

Figure 2 illustrates the placement of a flat sheet material over the female part of the mold of Figure 1;

Figure 3 illustrates the sheet conformed to the female part of the mold;

Figure 4 illustrates the removal of the conformed sheet as a formed shape from the mold and its transfer to a trim station;

Figure 5 illustrates the position of the formed shape during trimming and;

Figure 6 illustrates the finished "rolled lip" container and associated scrap material.

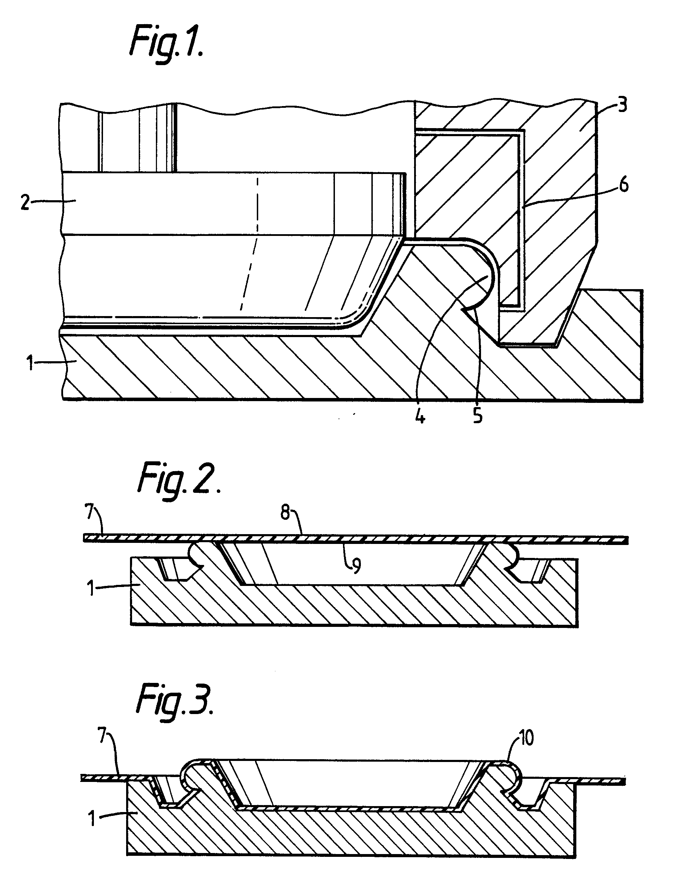

Figure 1 illustrates a female mold 1 and associated plug 2 and pressure box 3. Mold 1 is constructed with outward projecting edges 4, i.e. flanges, which are semi-circular in cross section with a deep undercut 5 intersecting the base of the semi-circle. A flange-forming air vent 6 is used to force a sheet which is being molded into the undercut 5 and form a flange or rolled lip. The pressure box 3 facilitates this.

In Figure 2 a flat sheet 7 of metal, plastics or paper composite is placed over the mold 1. For the purposes of this invention the side 8 of the sheet 7 which is facing upward is deemed to be the "top" and the side 9 of the sheet 7 which is facing downward and at this point adjacent to the mold 1 is the "bottom". The sheet 7 is deformed over the mold under the influence of a differential pressure between the volumes separated by the sheet 7. Heat, vacuum, mechanical or pneumatic assist may be used to implement the deformation process.

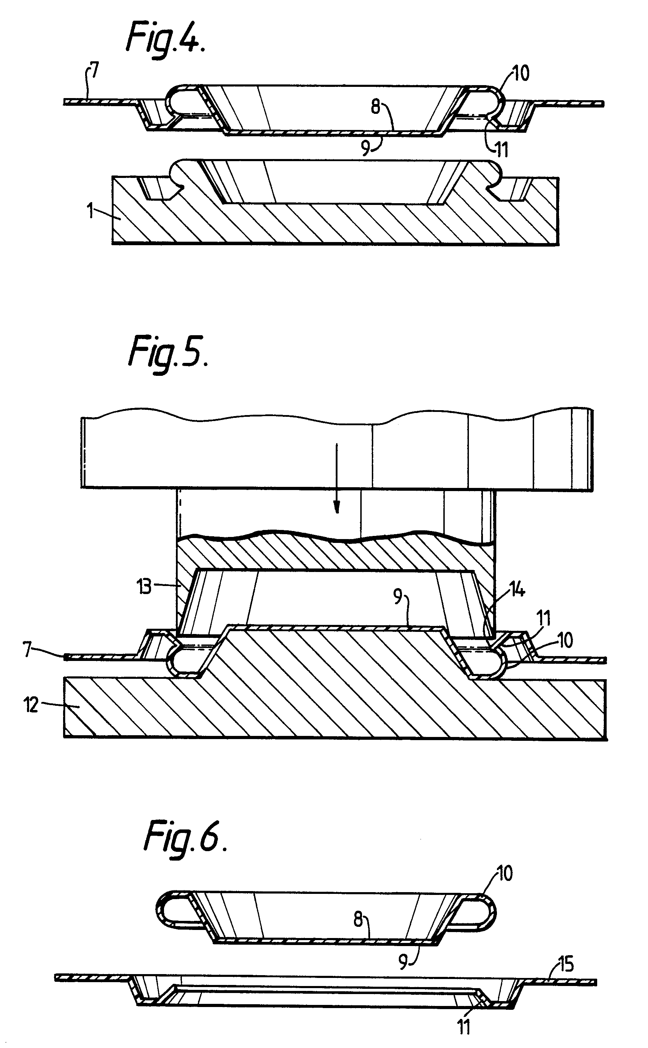

In Figure 3, the sheet 7 is shown actually deformed to conform to the mold. A "rolled lip" 10 is now a part of the sheet 7 as is a depending skirt 11 formed by conformation of the sheet 7 to the undercut 5 of mold 1.

Figure 4 illustrates the formed sheet 7 separated from the mold 1. The formed sheet 7 may be left adjacent and attached to the mold 1, or may be removed and transferred to a suitable support for trimming.

Figure 5 shows the formed sheet 7 inverted and placed on a support 12 for trimming . A trimming means 13 is advanced from the convex or bottom side 9 of the formed sheet 7. The trimming means 13 may be an angled or tapered blade or any other suitable means. The trimming means 13 is used to trim the formed sheet 7 from the convex or bottom side 9 starting at a point 14 on the lip 10 at which it joins the skirt 14. The trimming means 13 cuts through the shape around the periphery of the lip 10. At the same time there is formed a scrap portion 15 comprising the skirt 11. The trimming acts in the sense of shaving of lip 10 up against the mold or support 12. In this way, there is sufficient support beneath the "rolled lip" portion 10 to prevent disadvantageous flattening and deformation of the rolled lip 10. After the lip 10 has been cut, the final shaped is removed from the mold or support 12 and used downstream.

Containers made in accordance with the invention may be overwrapped with metal, paper, plastic or composite film without puncturing the film to provide, for example, shrink wrapped produce trays.

**Claims**

1. A method of making a rigid packaging container having a rolled lip or flange which comprises deforming a sheet of metal, plastics or paper composite material into a shape which comprises a generally concave container portion defined by a base portion and an upwardly extending side wall, a rolled lip or flange portion extending outwardly and downwardly around the periphery of said side wall, and a skirt portion depending from said rolled lip or flange and extending generally outwardly therefrom, advancing a trimming means from the convex or underside of said shape while said shape is supported so that it does not deform, and cutting said shape from said convex or underside at a point at or adjacent the junction between said rolled lip or flange and said skirt to provide a container comprising said container portion and said rolled lip or flange.

2. A process according to Claim 1 wherein deformation of the sheet is accomplished by solid phase pressure-forming or melt thermo-forming processes using a mold.

3. A process according to Claim 1 or 2 which comprises also the steps of filling the container with material to be packaged and overwrapping the container with a metal, paper, plastics or composite film.

**Fig.1.**

**Fig.2.**

**Fig.3.**

Fig.4.

Fig.5.

Fig.6.